# EUROPEAN PATENT APPLICATION

(11) **EP 4 748 485 A1**
(43) Date of publication of application: **27.05.2026**
(21) Application number: 25216485.0
(22) Date of filing: 17.11.2025
(51) Int. Cl.: B01J 8/02, B01J 8/04

(54) **MULTI-BRANCH REACTOR**

(30) Priority: 26.11.2024 US 202418960555
(71) Applicant: Aerospace Carbon Solutions LLC, Evendale, OH 45215 (US)
(72) Inventor: ERNO, Daniel, Niskayuna, 12309-1027 (US); SUN, Changjie, Niskayuna, 12309-1027 (US); JIAO, Yang, Niskayuna, 12309-1027 (US)
(74) Representative: Openshaw & Co.

(57) **Abstract**

A reactor (100) includes a reactor housing (101) defining a reactor volume (102). The reactor (100) comprises an inlet manifold (104) and an outlet manifold (110). The inlet manifold (104) comprises a plurality of inlet branches (108) defining inlet conduits. The outlet manifold (110) comprises a plurality of outlet branches (114) defining outlet conduits. A percolation region (120) is disposed between the plurality of inlet branches (108) and the plurality of outlet branches (114). The percolation region (120) including a flow path distance that extends between one of the plurality of inlet branches (108) and an adjacent one of the plurality of outlet branches (114), the flow path distance being approximately the same throughout the reactor volume (102). In some embodiments, the plurality of outlet branches (114) are interdigitated with the plurality of inlet branches (108). In some embodiments, the plurality of inlet branches (108) and the plurality of outlet branches (114) comprise a plurality of perforations (128) (130). In some embodiments, a catalyst (126) is disposed in the percolation region (120).

## Description

### TECHNICAL FIELD

These teachings relate generally to a reactor and, more particularly, to a multi-branch reactor.

### BACKGROUND

Reactors are commonly used in various chemical processes, including the production of synthesis gas ("syngas") and sustainable aviation fuel. These processes may involve passing different reactants through the reactor and heating the reactants to suitable temperatures to react chemically with a catalyst. In such approaches, the effectiveness of the heat and mass transfer may be based on the ability to heat the catalyst. Accordingly, it may be desirable to provide a system and method of operating a reactor to improve heat and mass transfer.

### BRIEF DESCRIPTION OF DRAWINGS

Various needs are at least partially met through provision of the multi-branch reactor described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 illustrates an exemplary reactor in accordance with various aspects described herein;
FIG. 2 illustrates a section view of a reactor shown in FIG. 1;
FIG. 3 illustrates a schematic view of fluid flow through the reactor as shown in FIG. 1;
FIG. 4A & FIG. 4B illustrate a cross-sectional view of an exemplary reactor in accordance with various aspects described herein; and
FIG. 5 is a flow chart of an exemplary method for heat and mass transfer in a reactor.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

The systems and methods for a multi-branch reactor described herein may be used to facilitate heat and mass transfer in a chemical reaction. The reactor includes a reactor housing having an inlet manifold disposed at one end of the reactor housing, an outlet manifold disposed at another end of the reactor housing and a heating manifold extending transverse to each manifold. The inlet, outlet, and heating manifold each include a plurality of branches that are integrally nested within the reactor volume. A percolation region is disposed between the integrally nested branches and in fluid communication with each manifold. The percolation region may contain a catalyst that can be removed and refilled between processing cycles of the reactor. A flow path through the percolation region is the same throughout the entire reactor volume so as to improve thermal transfer across the catalyst, reduce pressure drops and maximize the heat transfer surface area.

The approaches described herein involve a plurality of interdigitated inlet, outlet, and heating branches for mass and heat transfer. The interdigitated components of the reactor volume provide for increased heat transfer and low pressure drop due to boundary layer development being arrested from a series of repeating converging and diverging flow.

In traditional fixed bed reactor vessels, the flow of reactants through the catalyst bed is often non-uniform due to variations in the bed thickness, size of the bed, and flow paths of the reactant through the bed. These variations can lead to favored or preferential flow distributions where certain regions of the reactor receive more flow than others. As a result, large pressure variations throughout the reactor may occur leading to channeling through the bed and low catalyst efficiency.

Advantageously, the systems and methods of the reactor vessel described herein utilize an integrally nested reactor volume design to uniformly distribute reactants throughout the reactor volume for high utilization of the catalyst. As compared to traditional approaches, the approaches described herein use a percolation region with a uniform thickness and uniform size throughout the reactor volume. As such, a flow path distance through the percolation region is the same throughout the reactor volume to prevent pressure variations and preferential flow distributions.

It is contemplated that the systems and methods for manufacturing a reactor vessel described herein can be used in numerous applications. One exemplary application is in the power-to-liquids (PTL) processes that produce chemicals that are in liquid form at ambient temperature and pressure from renewable energy sources. There are many examples of PTL process that may be used. For example, such PTL processes may include the power-to-methanol (P2M) process, Fischer-Tropsch (FT) process, or methanol synthesis.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

The term "same," as used herein throughout the specification and claims, refers to a comparison of elements or features that have measurements or values within a permissible range of deviation without resulting in a change in the basic function, or intended performance to which it is related. For example, the term "same" may refer to being within a 10% margin.

The term "at least one of" in the context of, e.g., "at least one of A, B, and C" refers to only A, only B, only C, or any combination of A, B, and C.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

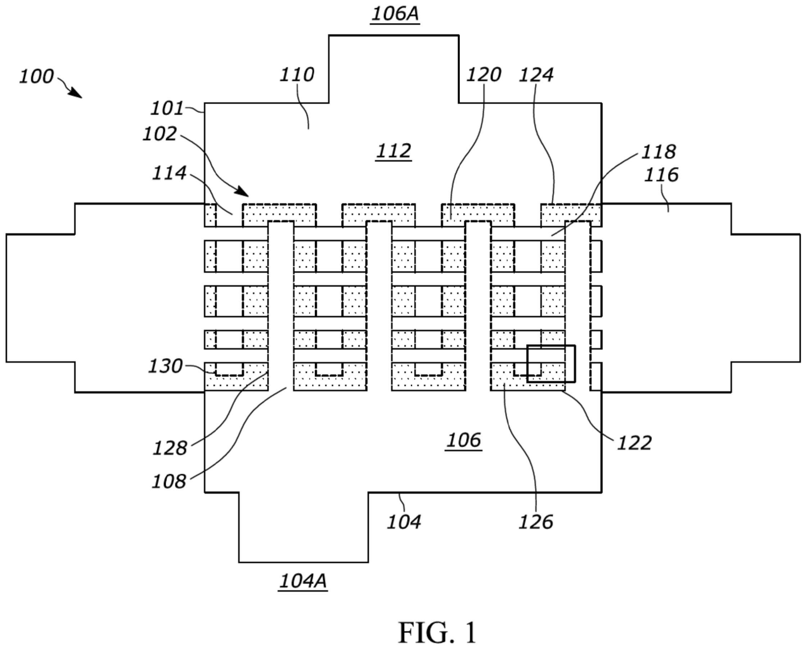

Turning to the figures and in particular to FIG. 1, a reactor 100 is shown which may be used to facilitate heat and mass transfer in chemical reactions. The reactor 100 may be a fixed-bed reactor. The reactor 100 includes a reactor housing 101 having an inlet manifold 104, an outlet manifold 110 and a heat transfer manifold 116. The inlet manifold 104 is disposed at a first end of the reactor housing 101 and the outlet manifold 110 is disposed at a second end of the reactor housing 101 opposite the first end. The heat transfer manifold 116 extends transverse to the inlet manifold 104 and the outlet manifold 110.

The reactor housing 101 defines a reactor volume 102. The reactor volume 102 is configured to carry out a reaction to convert a feedstock stream into a product stream. For example, the reaction may include an oxidation, reduction or hydrogenation reaction.

The inlet manifold 104 further comprises an inlet plenum 106 including a plurality of inlet branches 108 that extend into the reactor volume 102. The plurality of inlet branches 108 define inlet conduits that introduce a feedstock stream in the reactor volume 102. Each inlet branch of the plurality of inlet branches 108 has approximately the same cross-sectional area to provide a constant, steady flow of the feedstock stream through each inlet branch.

In some embodiments, the feedstock stream may comprise a liquid, a gas, or a combination thereof. In some examples, the feedstock may comprise at least steam (H₂O), carbon dioxide (CO₂), or a light hydrocarbon species. The light hydrocarbon species includes a hydrocarbon having a carbon number in the range of from about C1 to about C7, such as from about C1 to about C6, and in some aspects from about C1 to about C4. For example, the light hydrocarbon species may include one or more of methane, ethane, propane or butane. In some examples, the feedstock may include fossil-fuel based feedstock such as natural gas, flare gas, refining tail gas, etc. In some embodiments, the feedstock may be a non-fossil fuel fuel-based feedstock such as biogas, industrial waste gas, etc.

The outlet manifold 110 further comprises an outlet plenum 112 including a plurality of outlet branches 114 that extend into the reactor volume 102. The plurality of outlet branches 114 define outlet conduits that remove a product stream from the reactor volume 102. Each outlet branch of the plurality of outlet branches 114 have approximately the same cross-sectional area to provide a constant, steady flow of the product stream through each outlet branch.

The product stream may include a reaction product formed through the reaction of the feedstock stream. In some example, the product stream may comprise at least one of hydrogen (H₂) or syngas (CO + H₂).

In some aspects, each inlet branch of the plurality of inlet branches 108 has approximately the same cross-sectional area and each outlet branch of the plurality of outlet branches 114 has approximately the same cross-sectional area. The cross-sectional area of each branch of the plurality of inlet and outlet branches 108, 114 may be the same to enable equal fluid flow and pressure differential through each branch.

The manifolds 104, 110 provide for the flow of a feedstock stream to enter the reactor 100 and a product stream to exit the reactor 100. In some aspects, the plurality of outlet branches 114 of the outlet manifold 110 may introduce a feedstock stream into the reactor volume 102 and the plurality of inlet branches 108 of the inlet manifold 104 may remove a product stream from a reactor volume 102. In order words, the fluid may be introduced and/or removed from the reactor volume 102 through either one of the manifolds 104, 110.

As illustrated in FIG. 1, there are four inlet branches and four outlet branches; however, a larger or smaller total number of inlet branches and outlet branches can be provided. Any suitable number of inlet and outlet branches may be used as long as the total number of inlet branches is the same as the total number of outlet branches.

The heat transfer manifold 116 further comprises a plurality of heat transfer branches 118. The plurality of heat transfer branches 118 extend transverse to the inlet and outlet manifold 104, 110. While only four heat transfer branches are illustrated in FIG.1, any suitable number of heat transfer branches can be provided. The heat transfer manifold 116 is configured to receive a heat transfer fluid to transfer heat to the feedstock stream or remove heat from the feedstock stream. The heat transfer fluid may be selected based on the temperature range required for the desired reaction. In some examples, the heating manifold is configured to carry out a reaction at a temperature in the range of 100-500 degrees Celsius. Additionally, it will be appreciated that the heat transfer fluid may be used to heat and/or cool the reactor volume 102.

The plurality of inlet branches 108 and plurality of outlet branches 114 are arranged in an interdigitated pattern in the reactor volume 102. The interdigitated pattern is formed as a series of respective inlet branches nested, interwoven or interlocked within respective outlet branches. The interdigitated pattern maximizes the heat transfer surface area while minimizing a path through which a fluid travels resulting in a reduction in pressure drop and improved mass and heat transfer.

The reactor 100 further comprises a percolation region 120 disposed in the reactor volume 102 and in fluid communication with the inlet and outlet manifolds 104, 110. The percolation region 120 is nested in the reactor volume 102 within the inlet plenum 106 and outlet plenum 112 between the plurality of inlet branches 108 and plurality of outlet branches 114. The percolation region 120 may be disposed in an alternating, interlocking, or interdigitated manner between each respective one of the plurality of inlet branches 108 and an adjacent one of the plurality outlet branches 114. The cross-sectional area and width of the percolation region 120 is uniform throughout the reactor volume 102 to provide a constant, steady flow of the feedstock stream entering the percolation region 120 and product stream exiting the percolation region 120. In some aspects, the cross-sectional area of the percolation region 120 is the same as the cross-sectional area of the plurality of inlet and outlet branches 108, 114.

The channel walls 122 of the plurality of inlet branches 108 and the channel walls 124 of the plurality of outlet branches 114 include a plurality of perforations 128, 130 respectively. The percolation region 120 is disposed between the channel walls 122, 124. A channel wall 122,124 further includes a plurality of perforations 128, 130 for distributed flow and reduced pressure drop. The plurality of perforations 128,130 in each perforated channel wall 122, 124 are distributed such that a distance between corresponding perforations of adjacent inlet and outlet branches is the same across the percolation region 120 throughout the reactor volume 102.

The plurality of perforations 128 in the channel wall 122 of the plurality of inlet branches 108 may be approximately the same size as the plurality of perforations 130 in the plurality of outlet branches 114 and may be any suitable diameter to facilitate fluid flow. Further, any number of perforations may be included such that the plurality of perforations 128 is distributed throughout the plurality of inlet branches 108 and the plurality of perforations 130 is distributed throughout the plurality of outlet branches 114 to allow for enough flow through the percolation region 120. Further, it will be appreciated that the plurality of perforations 128, 130 may be distributed throughout the plurality of inlet branches 108 and the plurality of outlet branches 114 in any suitable manner. In some aspects, the plurality of perforations 128, 130 is distributed throughout one or more of the plurality of inlet branches 108 and the plurality of outlet branches 114 or may be distributed throughout each branch of the plurality of inlet branches 108 and the plurality of outlet branches 114. In some aspects, the plurality of perforations 128, 130 may be evenly distributed on each channel wall 122 of each one of the plurality of inlet branches 108 and each channel wall 124 of each one of the plurality of outlet branches 114.

The reactor 100 further includes a catalyst 126 disposed in the percolation region 120. A portion of the channel wall 122 near or adjacent the inlet plenum 106 does not contain any perforations in order to contain the catalyst 126 in the percolation region 120. In addition, a portion of the channel wall 124 near or adjacent the outlet plenum 112 may be open to allow for catalyst 126 refill and removal.

The catalyst 126 may be loaded into the reactor volume 102 through the outlet manifold 110. The catalyst 126 may be loaded into the reactor volume 102 through various suitable methods. For example, the catalyst 126 may be poured into the reactor volume 102 through the outlet manifold 110, or through a port of the outlet manifold 110.

The catalyst 126 may be removed from the reactor volume 102 through the outlet manifold 110. The catalyst 126 may be removed from the reactor volume 102 through various methods. For example, the catalyst 126 may be vacuumed out of the reactor volume 102 or the reactor 100 may be turned upside down for gravity assisted removal.

The catalyst 126 may be in many forms. In some approaches, the catalyst 126 may be in the form of powder. In other approaches, the catalyst 126 may be in the form of pellets. The pellets may include granular pellets with a diameter in the range of 1mm to 5mm. Examples of suitable catalysts include metal, a metal oxide, or a combination thereof. The catalyst 126 may be selected based on the desired catalyst reaction and product yield. In examples, the catalyst 126 may be selected based on a desired catalyst reaction and may include at least one of nickel (Ni), copper (Cu), iron (Fe), cobalt (Co), platinum (Pt), rhodium (Rh) or ruthenium (Ru).

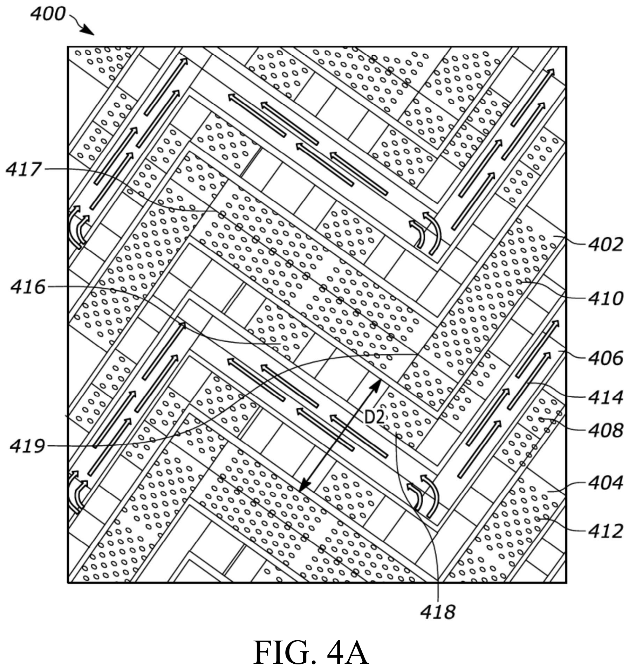

In some embodiments, the plurality of inlet branches 108 may split into two or more branches to define furcating inlet branches such as the furcating inlet branches 416 shown in FIG. 4A. The furcating inlet branches extend through the reactor volume 102 and join with an adjacent inlet branch at joinders such as the joinders 417 shown in FIG. 4A. In addition, the plurality of outlet branches 114 may split into two or more branches to define furcating outlet branches such as the furcating outlet branches 418 shown in FIG. 4A. The furcating outlet branches extend through the reactor volume 102 and join with an adjacent outlet branch at joinders such as the joinders 419 shown in FIG. 4A. The joinders may further enhance heat and mass transfer due by inhibiting boundary layer development in the furcating inlet and outlet branches due to the change in direction and division of flow.

The manufacturing of the furcating inlet and outlet branches may occur in a variety of manners; however, one suitable manufacturing method may include additive manufacturing. For example, additive manufacturing may be used to produce the intricate interdigitated arrangement of the nested furcating inlet and outlet branches, flow passage and heating channels. In this manner, suitable additive manufacturing may be used to create tailored interdigitated patterns that optimize heat and mass transfer.

In some embodiments, the reactor 100 may include one or more sensors (not shown) disposed within the reactor volume. In some aspects, the sensors may be configured to monitor various flow rates, temperatures, and/or compositions of fluid inside the reactor volume.

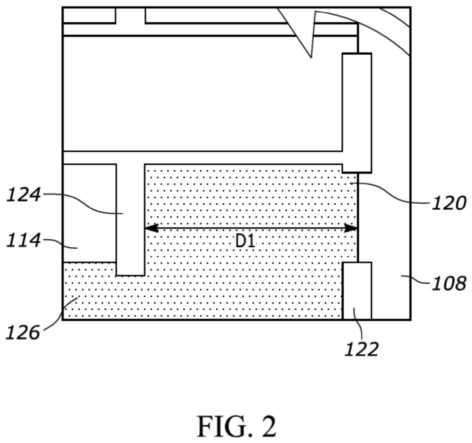

Referring now to FIG. 2, a section cut is taken at a location shown in FIG. 1. As shown in FIG. 2, a flow path distance D1 extends between a respective one of the plurality of inlet branches 108 and an adjacent one of plurality of outlet branches 114. Throughout the reactor volume, the flow path distance D1 across the percolation region 120 between the channel wall 122 of the plurality of inlet branches 108 and the channel wall 124 of the plurality of outlet branches 114 is approximately the same to improve thermal transfer across the catalyst and reduce pressure drops.

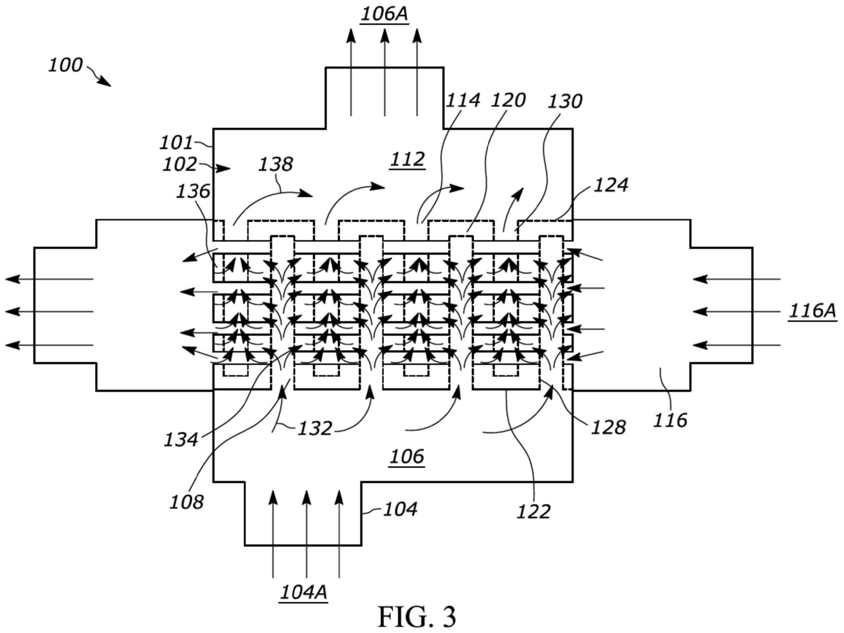

Referring now to FIG. 3, the fluid domains are depicted for a fluid passing through the reactor 100. During operation, a feedstock stream 104A flows into the reactor housing 101 through the inlet manifold 104 and through the inlet plenum 106. The inlet plenum 106 defines a first diverging domain. The feedstock stream 104A diverges into a plurality of inlet streams (represented by inlet flows 132) at each inlet branch of the plurality of inlet branches 108. Each branch of the plurality of inlet branches 108 defines a second diverging domain. The diverged inlet stream (represented by inlet flows 132) flows through a corresponding inlet branch and diverges into a plurality of inbound streams (represented by inbound flows 134) at various positions along the inlet branch corresponding to the positions of the plurality of perforations 128 in the channel wall 122. Between the first and second domain, the flow path for each inlet stream (represent by inlet flows 132) includes short flow lengths where the inlet stream may diverge (represented by inbound flows 134), and disrupt, interrupt, or otherwise eliminate the formation of a thermal boundary layer on the channel walls 122 of each inlet branch of plurality of inlet branches 108.

The pressure drop of the diverged inlet stream (represented by inlet flows 132) in each inlet branch is dependent on the resistance of the flow path, which may be proportional to the path length and size of the catalyst. The flow path (i.e., the flow path distance D1) is nominally the same across the percolation region 120 throughout the reactor volume 102 and the resulting pressure drop and flow rates in each one of plurality of inlet branches 108 may be approximately the same such that the diverged inbound streams (represented by inbound flows 134) are uniformly distributed throughout the plurality of perforations 128 in each of plurality of inlet branches 108. As a result, the flow rates of the diverged inbound streams (represented by inbound flows 134) through the plurality of perforations 128 in the channel wall 122 are approximately the same throughout the reactor volume 102 to result in a more effective utilization of the catalyst. As compared to traditional approaches, there is reduced occurrence of regions (e.g., the middle) that receive favored or preferential flow distributions, for embodiments depicted herein, as the thickness, size, and path of the flow through the percolation region are nominally uniform.

The diverged inbound streams (represented by inbound flows 134) flow through the plurality of perforations 128 in the channel wall 122 into the percolation region 120. Each diverged inbound stream (represented by inbound flows 134) is heated or cooled by a heat transfer fluid 116A flowing through the nested plurality of heat transfer branches 118. The heat transfer fluid 116A enters the heat transfer manifold 116 at a first end and exits the reactor at a second of the heat transfer manifold 116. The heat transfer fluid 116A transfers heat to each diverged inbound stream (represented by inbound flows 134) to heat the fluid and catalyst to suitable temperatures to facilitate a catalyst reaction. After interaction with the catalyst, a plurality of outbound streams (represented by outbound flows 136), including the reaction products, leave the percolation region 120 through the plurality of perforations 130 in the channel wall 124 in one of the plurality of outlet branches 114 adjacent to the respective inlet branch 108. Each branch of the plurality of outlet branches 114 defines a first converging domain. Additionally, as described above, the heat transfer fluid 116A may remove heat from each diverged inbound stream (represented by inbound flows 134) to maintain the reactant and catalyst at suitable temperatures. In examples, the heat transfer fluid 116A may remove heat from the reactor volume 102 after the catalyst reaction.

The plurality of outbound streams (represented by outbound flows 136) are converged along each one of the plurality of outlet branches 114 into a plurality of outlet streams (represented by outlet flows 138) at an end of each one of the plurality of outlet branches 114 proximal the outlet plenum 112. The outlet plenum 112 further defines a second converging domain. The plurality of outlet streams (represented by outlet flows 138) flow through the outlet plenum 112 and exit the outlet manifold 110 as a product stream 106A. The product stream 106A exiting the reactor housing 101 contains the desired reaction products.

In some embodiments, the product stream 106A contains unreacted reactants from the reactor volume 102. In some examples, the unreacted reactants may include light hydrocarbon species present in the feedstock stream 104A. As such, the reactor 100 may further comprise a recycle line (not shown) in fluid communication with the outlet manifold 110 and inlet manifold 104. The unreacted reactants (e.g., light hydrocarbon species) flow through the recycle line to be recycled back into the reactor volume 102 through the inlet manifold 104.

In some embodiments, the feedstock stream 104A may include a first feedstock stream and a second feedstock stream. The first feedstock stream and the second feedstock stream may be introduced into the reactor volume through the inlet manifold 104In some approaches, the second feedstock stream may include the unrecycled reactants recycled from the product stream 106A..

Referring to FIGS. 4A-4B, an isometric section view of an exemplary reactor 400 is shown which may be used to facilitate heat and mass transfer in chemical reactions. As shown in FIG. 4A, the reactor 400 includes a plurality of inlet manifolds 402, a plurality of outlet manifolds 404, and a plurality of heat transfer channels 406. The plurality of inlet manifolds 402 include furcating inlet branches 416 and the plurality of outlet manifolds 404 include furcating outlet branches 418. The furcating inlet branches 416 extend through the reactor and join with an adjacent inlet branch at an inlet joinder 417. The furcating outlet branches 418 extend through the reactor 400 and join with an adjacent outlet branch at an outlet joinder 419. As used herein, the term "furcating" refers to a manifold, or passageway that splits apart into two or more manifolds, or passageways.

The plurality of inlet manifolds 402 include a plurality of perforations 410 and the plurality of outlet manifolds 404 include a plurality of perforations 412 for facilitating fluid communication between manifolds. The plurality of inlet manifolds 402 are nested, interwoven or interlocked with the plurality of outlet manifolds 404. Additionally, the plurality of inlet and outlet manifolds 402, 404 are nested, interwoven or interlocked with the plurality of heat transfer channels 406 for close contact and improved thermal transfer. As shown, the plurality of inlet and outlet manifolds 402, 404 and plurality of heat transfer channels 406 are arranged at an angle. In some aspects, the interdigitated branches form a zig-zag or saw-tooth pattern. Various angles may be utilized, and according to some embodiments may be about 45 degrees. The interdigitated pattern maximizes the heat transfer surface area while minimizing a path through which a fluid travels resulting in a reduction in pressure drop and improved mass and heat transfer.

Integrally nested between the plurality of inlet manifolds 402 and the plurality of outlet manifolds 404 and the plurality of heat transfer channels 406 is a percolation region 408 containing a reaction material. The reaction material may include a catalyst. A heat transfer fluid 414 flows through the plurality of heat transfer channels 406 to uniformly heat the reaction material.

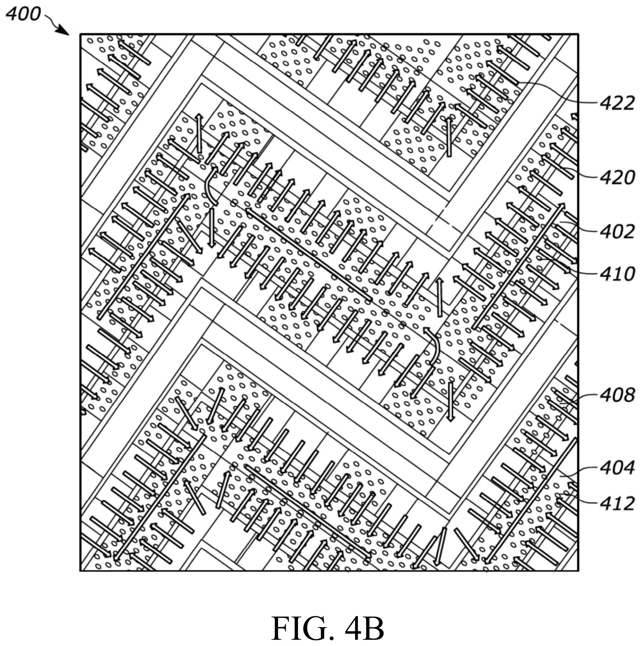

Referring now to FIG. 4B, the fluid domains are depicted for a fluid passing through the reactor 400. An initial feedstock stream enters the reactor 400 through an inlet (not shown) and flows through the plurality of inlet manifolds 402. The feedstock stream flows through each inlet manifold where it diverges into a plurality of inlet streams (represented by inlet flows 420).

A flow path distance D2 (as shown in FIG. 4A) between adjacent inlet and outlet manifolds is nominally the same through the reactor 400. In this manner, the resistance of the fluid through the percolation region 408 is nominally the same throughout the reactor 400 to enable low pressure drop and uniformly distributed heating.

The diverged plurality of inlet streams (represented by inlet flows 420) flow through a respective perforation of the plurality of perforations 410 of the plurality of inlet manifold 402 into the percolation region 408. As a result of constant flow resistance throughout the reactor 400, the fluid flow across the percolation region 408 is uniformly distributed for effective catalyst particle utilization.

Each inlet stream (represented by inlet flows 420) flows through the percolation region 408 where the fluid may interact with the reaction material. A plurality of outlet streams (represented by flows 422), including the reaction products, exit the percolation region 408 through a respective perforation of the plurality of perforations 412 on an adjacent outlet manifold of the plurality of outlet manifolds 404. The plurality of outlet streams (represented by flows 422) converge in each outlet manifold of the plurality of outlet manifolds 404. The converged stream forms a product stream that leaves the reactor through an outlet (not shown).

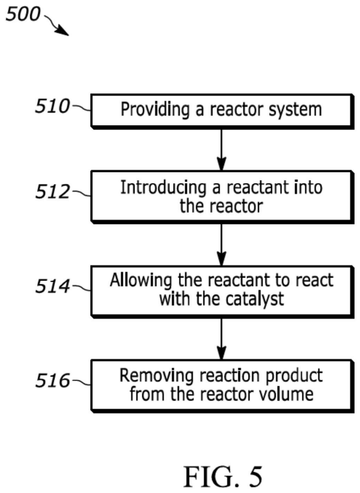

Referring to FIG. 5, an exemplary method for heat and mass transfer in chemical reactions involving catalyst powders is provided.

At block 510, the method 500 includes providing a fixed-bed reactor system. The fixed-bed reactor system may include a reactor housing defining a reactor volume, an inlet manifold and an outlet manifold disposed at opposite ends of the reactor housing, a plurality of nested, interdigitated inlet and outlet branches extending from the inlet and outlet manifolds, respectively, into the reactor volume, and a plurality of integral heating passages within the nested manifolds for uniform heating and enhanced mass and heat transfer. The inlet and outlet branches may have perforated channel walls for distributed flow and reduced pressure drop. In some embodiments, the reactor is the reactor 100 as described with reference to FIG. 1.

In some approaches, the reaction may include an oxidation, reduction, or hydrogenation reaction. The reaction may be carried out at any suitable temperature based on the desired reaction. For example, the reaction may be carried out at a temperature in the range of 100 degrees Celsius to 500 degrees Celsius. In some approaches, the reaction may further be carried out at a pressure in the range of 1 to 10 atmospheric pressure (atm).

In some approaches, the method 500 may further include the step of controlling the temperature of reaction using the integral heating passages. In some aspects, a flow rate or a temperature of a heat transfer fluid flowing through the integral heating passages may be adjusted to control the temperature of the reaction.

At block 512, the method 500 includes introducing a reactant into the reactor volume through the inlet manifold and inlet branches. The reactant may be in the form of at least one of gases, liquids, and combinations thereof.

In some approaches, the method 500 may further include introducing a second reactant into the reactor volume through the inlet manifold and inlet branches. The second reactant may be the same as or different that the reactant. In some examples, the second reactant my include unrecycled reactants recycled from a product stream.

At block 514, the method 500 includes allowing the reactor to react with the catalyst powders in the reactor volume.

In some approaches, the method 500 further includes the step of monitoring the reaction using sensors disposed within the reactor volume.

At block 516, the method 500 includes removing reaction products from the reactor volume through the outlet branches and outlet manifold.

In some approaches, the method 500 may further include the step of removing unreacted reactants from the reactor volume through the outlet branches and outlet manifold. The unreacted reactants may be recycled back into the reactor volume via a recycle line. In some examples, the second reactant introduced into the reactor volume may be the unreacted reactants.

Further aspects of the disclosure are provided by the subject matter of the following clauses:
A reactor comprising a reactor housing defining a reactor volume, the reactor housing having a first end and a second end spaced from and disposed opposite the first end, the reactor housing comprising: an inlet manifold disposed at the first end of the reactor housing, the inlet manifold comprising a plurality of inlet branches that extend into the reactor volume, the plurality of inlet branches defining inlet conduits that receive a fluid and deliver the fluid into the reactor volume; an outlet manifold disposed at the second end of the reactor housing, the outlet manifold comprising a plurality of outlet branches that extend into the reactor volume, the plurality of outlet branches defining outlet conduits that receive the fluid from the reactor volume and deliver the fluid out of the reactor volume, the plurality of outlet branches being interdigitated with the plurality of inlet branches; and a percolation region disposed in the reactor volume between the plurality of inlet branches and the plurality of outlet branches and in fluid communication with the inlet manifold and the outlet manifold, the percolation region having a flow path distance that extends between one of the plurality of inlet branches and an adjacent one of the plurality of outlet branches.

The reactor of any preceding clause further comprising: a heat transfer manifold extending transverse to the inlet manifold and the outlet manifold, the heat transfer manifold comprising a plurality of heat transfer branches nested within the percolation region between the plurality of inlet branches and the plurality of outlet branches.

The reactor of any preceding clause, wherein the flow path distance for the percolation region is approximately the same throughout the reactor volume.

The reactor of any preceding clause, wherein the reactor housing further comprises a catalyst disposed in the percolation region.

The reactor of any preceding clause, wherein a portion of the outlet manifold adjacent to the reactor volume includes one or more openings to facilitate removal and/or addition of catalyst to the percolation region.

The reactor of any preceding clause, wherein the plurality of inlet branches further comprising a plurality of perforations.

The reactor of any preceding clause, wherein the plurality of perforations is uniformly distributed throughout the plurality of inlet branches, and wherein the plurality of perforations are approximately the same size.

The reactor of any preceding clause, wherein the plurality of outlet branches further comprising a plurality of perforations.

The reactor of any preceding clause, wherein the plurality of perforations is uniformly distributed throughout the plurality of outlet branches, and wherein the plurality of perforations are approximately the same size.

The reactor of any preceding clause, where the reactor is a fixed-bed reactor.

The reactor of any preceding clause, wherein each of the plurality of inlet branches have approximately the same cross-sectional area, and wherein each of the plurality of outlet branches have approximately the same cross-sectional area.

A reactor comprising a reactor housing defining a reactor volume, the reactor housing having a first end and a second end spaced from and disposed opposite the first end, the reactor housing comprising: an inlet manifold disposed at the first end of the reactor housing, the inlet manifold comprising a plurality of furcating inlet branches that extend into the reactor volume, the plurality of furcating inlet branches defining fluid inlet channels that extend therethrough, the plurality of furcating inlet branches being perforated such that the fluid inlet channels are in fluid communication with the reactor volume; an outlet manifold disposed at the second end of the reactor, the outlet manifold comprising a plurality of furcating outlet branches that extend into the reactor volume, the plurality of furcating outlet branches defining fluid outlet channels that extend therethrough, the plurality of furcating outlet branches being perforated such that the fluid outlet channels are in fluid communication with the reactor volume, wherein the plurality of furcating inlet branches are nested within the plurality of furcating outlet branches, the plurality of furcating inlet branches being intertwined with the plurality of furcating outlet branches; and a percolation region disposed in the reactor volume between and in fluid communication with the inlet manifold and the outlet manifold, the percolation region comprising a catalyst.

The reactor of any preceding clause, wherein each of plurality of furcating inlet branches split into two or more inlet branches.

The reactor of any preceding clause, wherein each of plurality of furcating outlet branches split into two or more outlet branches.

The reactor of any preceding clause, wherein the plurality of furcating inlet branches have approximately a same cross-sectional area as the plurality of furcating outlet branches.

The reactor of any preceding clause, wherein the percolation region has a flow path distance that extends between one of the plurality of furcating inlet branches and an adjacent one of the plurality of furcating outlet branches, the flow path distance for the percolation region being approximately the same throughout the reactor volume.

The reactor of any preceding clause, wherein adjacent ones of the plurality of furcating inlet branches meet at joinders.

The reactor of any preceding clause, wherein adjacent ones of the plurality of furcating outlet branches meet at joinders.

The reactor of any preceding clause, wherein the reactor further comprises a heat transfer manifold comprising a plurality of heat transfer branches nested within the percolation region between the plurality of furcating inlet branches and the plurality of furcating outlet branches.

A fixed-bed reactor system for heat and mass transfer in chemical reactions involving catalyst powders, comprising: a reactor housing defining a reactor volume; an inlet manifold and an outlet manifold disposed at opposite ends of the reactor housing; a plurality of nested, interdigitated inlet and outlet branches extending from the inlet and outlet manifolds, respectively, into the reactor volume, the inlet and outlet branches having perforated channel walls; and a percolation region disposed between the plurality of nested, interdigitated inlet and outlet branches configured for uniform heating and enhanced mass and heat transfer, the percolation region comprising a catalyst.

A method for heat and mass transfer in chemical reactions involving catalyst powders, comprising the steps of: providing a fixed-bed reactor system comprising a reactor housing defining a reactor volume, an inlet manifold and an outlet manifold disposed at opposite ends of the reactor housing, a plurality of nested, interdigitated inlet and outlet branches extending from the inlet and outlet manifolds, respectively, into the reactor volume, the inlet and outlet branches having perforated channel walls for distributed flow and reduced pressure drop, and a plurality of integral heat transfer passages within the nested manifolds; introducing a reactant into the reactor volume through the inlet manifold and inlet branches; allowing the reactant to react with the catalyst powders in the reactor volume; removing reaction products from the reactor volume through the outlet branches and outlet manifold.

The method of any preceding clause, wherein the reactant is selected from the group consisting of gases, liquids, and combinations thereof.

The method of any preceding clause, wherein the catalyst powders comprise a metal, a metal oxide, or a combination thereof.

The method of any preceding clause, wherein the reaction is an oxidation, reduction, or hydrogenation reaction.

The method of any preceding clause, wherein the reaction is carried out at a temperature in the range of 100-500°C.

The method of any preceding clause, wherein the reaction is carried out at a pressure in a range of 1-10 atm.

The method of any preceding clause, further comprising the step of monitoring the reaction using sensors disposed within the reactor volume.

The method of any preceding clause, further comprising the step of controlling a temperature of the reaction using the integral heat transfer passages.

The method of any preceding clause, further comprising the step of introducing a second reactant into the reactor volume through the inlet manifold and inlet branches.

The method of any preceding clause, further comprising the step of removing unreacted reactants from the reactor volume through the outlet branches and outlet manifold.

The method of any preceding clause, further comprising the step of recycling unreacted reactants back into the reactor volume.

## Claims

1. A reactor (100) comprising a reactor housing (101) defining a reactor volume (102), the reactor housing (101) having a first end and a second end spaced from and disposed opposite the first end, the reactor housing (101) comprising:
an inlet manifold (104) disposed at the first end of the reactor (100) housing (101), the inlet manifold (104) comprising a plurality of inlet branches (108) that extend into the reactor volume (102), the plurality of inlet branches (108) defining inlet conduits that receive a fluid and deliver the fluid into the reactor volume (102);
an outlet manifold (110) disposed at the second end of the reactor housing (101), the outlet manifold (110) comprising a plurality of outlet branches (114) that extend into the reactor volume (102), the plurality of outlet branches (114) defining outlet conduits that receive the fluid from the reactor volume (102) and deliver the fluid out of the reactor volume (102), the plurality of outlet branches (114) being interdigitated with the plurality of inlet branches (108); and
a percolation region (120) disposed in the reactor volume (102) between the plurality of inlet branches (108) and the plurality of outlet branches (114) and in fluid communication with the inlet manifold (104) and the outlet manifold (110), the percolation region (120) having a flow path distance (D1) that extends between one of the plurality of inlet branches (108) and an adjacent one of the plurality of outlet branches (114).

2. The reactor (100) of claim 1, further comprising:
a heat transfer manifold (116) extending transverse to the inlet manifold (104) and the outlet manifold (110), the heat transfer manifold (116) comprising a plurality of heating branches (118) nested within the percolation region (120) between the plurality of inlet branches (108) and the plurality of outlet branches (114).

3. The reactor (100) of any preceding claim, wherein the reactor housing (101) further comprises a catalyst (126) disposed in the percolation region (120).

4. The reactor (100) of any preceding claim, wherein a portion of the outlet manifold (110) adjacent to the reactor volume (102) includes one or more openings to facilitate removal and/or addition of catalyst (126) to the percolation region (120).

5. The reactor (100) of any preceding claim, wherein the plurality of inlet branches (108) further comprises a plurality of perforations (128), and wherein the plurality of outlet branches (114) further comprising a plurality of perforations (130).

6. The reactor (100) of claim 5, wherein the plurality of perforations (128) is uniformly distributed throughout the plurality of inlet branches (108), and wherein the plurality of perforations (128) is approximately the same size.

7. The reactor (100) of claim 5 or 6, wherein the plurality of perforations (130) is uniformly distributed throughout the plurality of outlet branches (114), and wherein the plurality of perforations (130) are approximately the same size.

8. The reactor (100) of any preceding claim, wherein the plurality of inlet branches (108) have approximately the same cross-sectional area, and wherein each of the plurality of outlet branches (114) have approximately the same cross-sectional area.

9. The reactor (100) of any preceding claim wherein the plurality of inlet branches (108) comprise a plurality of furcating inlet branches (416), and wherein the plurality of outlet branches (114) comprise a plurality of furcating outlet branches (418), and wherein the plurality of furcating inlet branches (416) being intertwined with the plurality of furcating outlet branches (418).

10. The reactor (100) of claim 9, wherein each of plurality of furcating inlet branches (416) split into two or more inlet branches and wherein each of plurality of furcating outlet branches (418) split into two or more outlet branches.

11. The reactor (100) of any preceding claim, wherein the flow path distance (D1) for the percolation region (120) is approximately the same throughout the reactor volume (102).

12. The reactor (100) of any of claims 9 to 11, wherein the percolation region (120) has a flow path distance (D1) that extends between one of the plurality of furcating inlet branches (416) and an adjacent one of the plurality of furcating outlet branches (418), the flow path distance (D1) for the percolation region (120) being approximately the same throughout the reactor (100) volume (102).

13. The reactor (100) of any of claims 9 to 12, wherein adjacent ones of the plurality of furcating inlet branches (416) meet at joinders (417) and wherein adjacent ones of the plurality of furcating outlet branches (418) meet at joinders (419).

14. The reactor (100) of any of claims 9 to 13, wherein the reactor (100) further comprises a heat transfer manifold comprising a plurality of heat transfer branches (118) nested within the percolation region (120) between the plurality of furcating inlet branches (416) and the plurality of furcating outlet branches (418).

15. A method for heat and mass transfer in chemical reactions involving catalyst (126) powders, comprising the steps of:
providing a fixed-bed reactor (100) system comprising a reactor housing (101) defining a reactor volume (102), an inlet manifold (104) and an outlet manifold (110) disposed at opposite ends of the reactor housing (101), a plurality of nested, interdigitated inlet and outlet branches (108, 114) extending from the inlet and outlet manifolds (104, 110), respectively, into the reactor volume (102), the inlet and outlet branches (108, 114) having perforated channel walls for distributed flow and reduced pressure drop, and a plurality of integral heat transfer passages within the nested manifolds;
introducing a reactant into the reactor volume (102) through the inlet manifold (104) and inlet branches;
allowing the reactant to react with the catalyst (126) powders in the reactor (100) volume (102); and
removing reaction products from the reactor (100) volume (102) through the outlet branches (114) and outlet manifold (110).
